# EUROPÄISCHE PATENTSCHRIFT

(11) **EP 1 175 818 B1**
(45) Veröffentlichungstag und Bekanntmachung des Hinweises auf die Patenterteilung: **19.12.2007**
(21) Anmeldenummer: 01114200.7
(22) Anmeldetag: 12.06.2001
(51) Int. Cl.: A01B 63/111

(54) **Vorrichtung zum Steuern der Arbeitstiefe eines Bodenbearbeitungsgerätes, insbesondere eines Pfluges**
Device for controlling the working depth of a soil working machine, particularly a plough
Dispositif pour régler la profondeur de travail d'une machine de travail du sol, en particulier une charrue

(30) Priorität: 22.07.2000 DE 10035768
(43) Veröffentlichungstag der Anmeldung: 30.01.2002
(73) Patentinhaber: ROBERT BOSCH GMBH, 70442 Stuttgart (DE)
(72) Erfinder: Hesse, Horst, 70195 Stuttgart (DE)
(74) Vertreter: Thürer, Andreas

(56) Entgegenhaltungen:
- EP-A- 0 433 669
- EP-A- 0 494 516
- EP-A- 0 773 120
- DE-A- 2 149 369
- DE-A- 3 446 811
- DE-A- 4 119 414
- GB-A- 2 157 856

## Beschreibung

### Stand der Technik

Die Erfindung geht von einer Vorrichtung zum Steuern der Arbeitstiefe eines Bodenbearbeitungsgerätes nach der im Oberbegriff des Anspruchs 1 näher angegebenen Gattung aus. Eine derartige Vorrichtung zum Steuern der Arbeitstiefe eines Bodenbearbeitungsgerätes kann an einer Zugmaschine, insbesondere an einem Traktor vorgesehen sein.

Aus der EP 0 494 516 A1 ist ein Traktor mit einem an einem Hubwerk angebauten Pflug und mit einer Vorrichtung gemäß dem Oberbegriff des Patentanspruchs 1 bekannt.

Aus der DE-A-21 49 369 ist es bekannt, bei einer Zugmaschine mit mindestens einer federnd abgestützten Achse die Nickbewegungen eines an die Zugmaschine angebauten Pfluges zu vermeiden. Dazu werden die Einfederungen der Achsen gegenüber dem Fahrzeugkörper erfasst. Das Hubwerk wird entsprechend der Position der Achsen zum Fahrzeugkörper angesteuert.

Aus der EP 0 518 226 A1 ist eine landwirtschaftlich nutzbare Zugmaschine mit angelenktem Hubwerk bekannt. An dem heckseitig an der Zugmaschine angelenkten Hubwerk kann ein Bodenbearbeitungsgerät vorgesehen werden. Dazu weist das Hubwerk in an sich bekannter Weise ein Dreipunktgestänge mit Oberlenker und Unterlenker auf, die an einem Rahmen der Zugmaschine schwenkbar befestigt sind.

Bei der bekannten Zugmaschine ist eine elektrohydraulische Hubwerks-Regeleinrichtung mit Regelventilen und einem elektronischen Steuergerät vorgesehen. Mit Hilfe der elektrohydraulischen Hubwerks-Regeleinrichtung kann das Hubwerk und damit das an dem Hubwerk angelenkte Bodenbearbeitungsgerät nicht nur in Betriebsstellung in verschiedenen Regelungsarten betrieben werden, sondern es kann das Hubwerk auch aus der Betriebsstellung heraus in eine Aushubstellung verfahren, wie dies bei Transportfahrten der Zugmaschine, insbesondere bei höheren Geschwindigkeiten, üblich ist.

Die elektrohydraulische Hubwerks-Regeleinrichtung in Verbindung mit dem elektronischen Steuergerät ermöglicht eine der jeweiligen Betriebssituation weitgehend angepaßte Ansteuerung des Bodenbearbeitungsgerätes, wobei zahlreiche auf die Zugmaschine und das Bodenbearbeitungsgerät einwirkende Kräfte berücksichtigt werden.

So bildet es bei der bekannten Zugmaschine z.B. ein Regelsystem zur aktiven Dämpfung von Nickschwingungen um eine horizontale Querachse der Zugmaschine, bei dem die Masse der Vorderachse als Tilgermasse eingesetzt wird. Die Vorderachse weist eine am Rahmen der Zugmaschine abgestützte hydropneumatische Federung auf, wobei jedem Rad der Vorderachse ist ein Hydrozylinder zugeordnet ist. Die Lage der gefederten Vorderachse relativ zum Rahmen der Zugmaschine wird von einem elektromechanischen Wegaufnehmer abgegriffen. Des weiteren ist ein Drucksensor vorgesehen, der den jeweiligen Druck in den Druckräumen der Hydrozylinder registriert. Die von dem Wegaufnehmer und von dem Drucksensor erzeugten elektrischen Signale werden an das elektronische Steuergerät der elektrohydraulischen Hubwerks-Regeleinrichtung ausgegeben. Die Nickschwingungen führen infolge der Massenträgheit von dem Rahmen der Zugmaschine und der Vorderachse zu Beschleunigungskräften, die ihrerseits in den Druckräumen der Hydrozylinder zu Druckänderungen führen. Diese Druckänderungen werden von dem Drucksensor aufgenommen, der seine entsprechenden elektrischen Signale an das elektronische Steuergerät der elektrohydraulischen Hubwerksregeleinrichtung weiter gibt. Diese Signale werden zur Ermittung des jeweiligen Schwingungszustandes der Zugmaschine herangezogen und werden vom elektronischen Steuergerät als Istwerte im Regelkreis zur aktiven Schwingungsdämpfung verarbeitet.

Mit Hilfe des als elektronischer Regler arbeitenden Steuergeräts wird nun das mit den Hydrozylindern hydraulisch verbundene Regelventil so angesteuert, daß eine angeregte Schwingung des Rahmens der Zugmaschine, insbesondere dessen Nickschwingungen um die Querachse, aktiv abgebaut werden.

Bei derartigen Zugmaschinen, die eine Vorrichtung zum Steuern der Arbeitstiefe des Bodenbearbeitungsgerätes aufweisen, kann des weiteren vorgesehen sein, daß das Bodenbearbeitungsgerät höhenverstellbar mit einer z.B. als elektrohydraulische Hubwerks-Regeleinrichtung ausgebildeten Steuerelektronik ansteuerbar ist. Das Hubwerk und das Bodenbearbeitungsgerät weisen hierzu Sensoren auf, deren Signale als Regelgrößen für die Steuerelektronik vorgesehen sind. Die Lage des Bodenbearbeitungsgerätes relativ zur Zugmaschine wird z.B. von einem Lagesensor am Hubarm des Hubwerkes erfaßt und die am Unterlenker anliegende Zugkraft wird von einem Kraftsensor ermittelt. Die Signale des Lage- und des Kraftsensors werden als Regelgrößen über entsprechende Eingänge von der Steuerelektronik erfaßt.

Das Bodenbearbeitungsgerät kann an seinem heckseitigen Ende auch ein Stützrad aufweisen, das über einen Hydraulikzylinder höhenverstellbar angelenkt sein kann. Der Hydraulikzylinder ist mit einem Wegsensor ausgerüstet, der seine Signale über einen entsprechenden Regelgrößeneingang an die Steuerelektronik meldet. Des weiteren ist ein Drucksensor am Hydraulikzylinder des Stützrades vorgesehen, welcher den jeweiligen auf das Stützrad bzw. auf das Bodenbearbeitungsgerät wirkenden Lastdruck erfaßt. Auch diese Signale werden an die Steuerelektronik als weitere Regelgröße vorgegeben.

Neben den Signalen der Sensoren des Hubwerkes und des Bodenbearbeitungsgerätes sind auch Sollwertvorgaben bei der Steuerelektronik vorgesehen. Dafür ist die Steuerelektronik mit mehreren Sollwerteingängen ausgerüstet. Die bekannte Vorrichtung umfaßt des weiteren eine Regeleinrichtung, welche mit der Steuerelektronik gekoppelt ist. Die Regeleinrichtung kann eine Hydraulikanlage aufweisen, welche über Regelventile mit den Hydraulikzylindern des Hubwerkes und des Bodenbearbeitungsgerätes in hydraulisches Wirkverbindung steht. Die Hydraulikzylinder werden mit Hilfe der Hydraulikanlage derart über die Steuerelektronik angesteuert, daß eine vorbestimmte Arbeitstiefe des Bodenbearbeitungsgerätes ansteuerbar ist. Somit ist das Bodenbearbeitungsgerät mit Hilfe der am Hubwerk und am Bodenbearbeitungsgerät vorgesehenen Hydraulikzylindern höhenverstellbar.

Die bekannte Vorrichtung zum Steuern der Arbeitstiefe eines Bodenbearbeitungsgerätes weist jedoch den Nachteil auf, daß nicht alle auf eine Zugmaschine wirkenden Vertikalkräfte bei der Ansteuerung des Bodenbearbeitungsgerätes verwendet werden. Dies kann dazu führen, daß insbesondere beim Senken des Bodenbearbeitungsgerätes die Vorderachslast der Zugmaschine derart verringert wird, daß die Räder der Vorderachse der Zugmaschine beispielsweise den Bodenkontakt verlieren. Damit wird die Lenkeigenschaft der Zugmaschine deutlich verschlechtert. Darüber hinaus wird dabei auch der Wirkungsgrad der Triebachse der Zugmaschine verringert.

### Vorteile der Erfindung

Die erfindungsgemäße Vorrichtung zum Steuern der Arbeitstiefe eines Bodenbearbeitungsgerätes, insbesondere eines Pfluges, mit den Merkmalen des Patentanspruches 1 stellt eine Verbesserung des Stands der Technik dahingehend dar, daß durch die optimale Nutzung der auf die Zugmaschine wirkenden Vertikalkräfte eine ausreichende Vorderachslast der Zugmaschine zur Sicherstellung der Lenkeigegenschaften der Zugmaschine gewährleistet wird.

Darüber hinaus wird bei der erfindungsgemäßen Vorrichtung durch die optimale Lastverteilung bei der Zugmaschine der Wirkungsgrad der Triebachsen optimiert, denn die Triebachsen der Zugmaschine haben zu jedem Zeitpunkt Bodenkontakt. Somit ist jederzeit eine Kraftübertragung über die Räder der Triebachsen der Zugmaschine gewährleistet.

Bei der erfindungsgemäßen Vorrichtung zum Steuern der Arbeitstiefe eines Bodenbearbeitungsgerätes werden als Regelgrößen für die Steuerelektronik neben den Signalen der Sensoren des Hubwerkes und des Bodenbearbeitungsgerätes zusätzlich Signale eines Sensors der Vorderachse der Zugmaschine verwendet.

Dabei können die elektrischen Signale eines an der Vorderachse vorgesehenen und gegebenenfalls bereits vorhandenen Lagesensors oder Winkelsensors für die Regelung zur Lastübertragung derart genutzt werden, daß insbesondere die Lage des Oberlenkers des Hubwerkes so beeinflußt wird, daß die Vorderachslast der Zugmaschine vorzugsweise konstant gehalten wird.

Beim Senken bzw. beim Heben des Bodenbearbeitungsgerätes ist erfindungsgemäß vorgesehen, daß die Triebachse der Zugmaschine nicht zu große Entlastung erfährt. Gemäß einer bevorzugten Ausführungsform der Erfindung erfolgt das Heben bzw. das Senken des Bodenbearbeitungsgerätes über eine der Steuerelektronik vorgegebene Lagesollwertfunktion.

Insbesondere beim schnellen Senken des Bodenbearbeitungsgerätes kann eine unzulässige Entlastung der Vorderachse der Zugmaschine erfolgen, d.h. die Vorderachslast der Zugmaschine kann einen vorgegebenen Minimalwert unterschreiten. Deshalb ist beim Senken des Bodenbearbeitungsgerätes erfindungsgemäß eine Rampenfunktion als Lagesollwertfunktion vorgesehen. Diese Rampenfunktion bewirkt, daß das Senken des Bodenbearbeitungsgerätes allmählich innerhalb eines vorgegebenen Zeitintervalls erfolgt, wie dies durch die entsprechende Lageistwertfunktion ausgedrückt wird.

### Zeichnung

Ein Ausführungsbeispiel der Erfindung ist in der Zeichnung dargestellt und in der nachfolgenden Beschreibung näher erläutert. Es zeigen
Figur 1 in stark vereinfachter Form eine Seitenansicht einer als Traktor ausgebildeten Zugmaschine mit angelenktem Pflug und einer erfindungsgemäßen Vorrichtung zum Steuern der Arbeitstiefe des Pfluges,
Figur 2 eine schematische Vorderansicht einer Vorderachse des Traktors mit einer hydropneumatischen Niveauregelung, und
Figur 3 eine Darstellung mit Verläufen einer Lagesollwertfunktion und einer Lageistwertfunktion beim Senken und beim Heben des an dem Traktor angelenkten Pfluges.

### Beschreibung des Ausführungsbeispiels

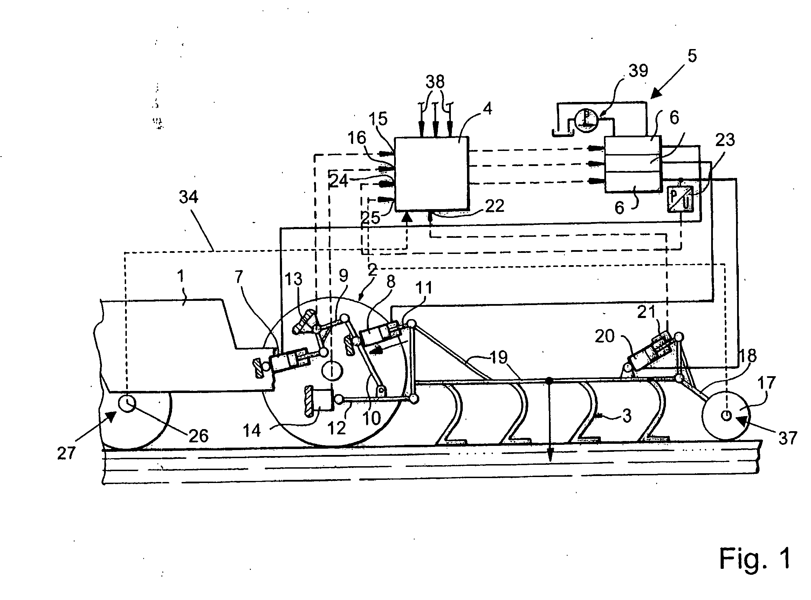

In Figur 1 ist eine als Traktor 1 ausgebildete Zugmaschine mit einem heckseitig bewegbar angeordneten Hubwerk 2 dargestellt. Der Traktor 1 weist eine. Vorrichtung zum Steuern der Arbeitstiefe eines an einem Hubwerk 2 angelenkten Bodenbearbeitungsgerätes auf. Das Bodenbearbeitungsgerät ist in Figur 1 als Pflug 3 dargestellt.

Die erfindungsgemäße Vorrichtung weist eine Steuerelektronik 4 auf, die mittels dem Hubwerk 2 den angelenkten Pflug 3 ansteuert. Die Steuerelektronik 4 ist mit einer Regeleinrichtung 5 gekoppelt. Diese Regeleinrichtung 5 weist eine Hydraulikanlage 39 auf, welche Regelventile 6 umfaßt. Die Hydraulikanlage 39 steht mittels der Regelventile 6 mit Hydraulikzylindern 7, 8 des Hubwerks 2 in Wirkverbindung. Von diesen Hydraulikzylindern 7, 8 wirkt ein Hydraulikzylinder 7 über einen Hubarm 9 auf ein Dreipunktgestänge aus einem Oberlenker 11 und einem Unterlenker 12. Ein weiterer Hydraulikzylinder 8 wirkt über eine Hubstange 10 ebenfalls auf den Oberlenker 11 und den Unterlenker 12.

Des weiteren sind an dem Hubwerk 2 ein Lagesensor 13 und ein Kraftsensor 14 vorgesehen. Der Lagesensor 13 ist am Hubarm 9 angeordnet und ermittelt die Lage des Pfluges 3 relativ zum Traktor 1. Der Kraftsensor 14 ist am Unterlenker 12 des Hubwerkes 2 vorgesehen und ermittelt die auf den Unterlenker 12 wirkende Zugkraft.

Die von dem Lagesensor 13 und dem Kraftsensor 14 ausgehenden elektrischen Signale 15, 16 sind als Regelgrößen für die Steuerelektronik 4 vorgesehen. Die in die Steuerelektronik 4 eingehenden Signale 15, 16 werden durch eine gestrichelte Linie in Figur 1 angedeutet.

Darüber hinaus sind an der Steuerelektronik 4 noch zusätzliche Sollwerteingänge 38 vorgesehen. Die Sollwerteingänge 38 sind in Figur 1 als Pfeile dargestellt.

Der an dem Hubwerk 2 angelenkte Pflug 3 weist an seinem heckseitigen Ende ein Stützrad 17 auf, welches über einen Schwenkhebel 18 verstellbar an einem Rahmen 19 des Pfluges 3 gelagert ist. Zur Höhenverstellung des Stützrades 17 ist ein hydraulisch verstellbarer Stützradzylinder 20 vorgesehen, der einerseits mit dem Rahmen 19 des Pfluges 3 und andererseits mit dem Schwenkhebel 18 in Wirkverbindung steht.

Der Stützradzylinder 20 weist darüber hinaus einen Wegsensor 21 auf, der die jeweilige Stellung des Stützradzylinders 20 registriert. Die Signale 22 des Wegsensors 21 sind ebenfalls als Regelgröße für die Steuerelektronik 4 vorgesehen. Auch hier ist das Signal 22 als gestrichelte Linie dargestellt.

Des weiteren steht der Stützradzylinder 20 mit einem Drucksensor 23 in Verbindung, welcher den jeweiligen Lastdruck am Stützradzylinder 20 aufnimmt. Darüber hinaus weist das Stützrad 17 des Pfluges 3 zusätzlich einen Drehzahlsensor 37 auf, der die jeweilige Drehzahl an dem Stützrad 17 ermittelt. Das Signal 24 des Drucksensors 23 sowie das Signal 25 des Drehzahlsensors 37 sind als Regelgrößen für die Steuerelektronik 4 vorgesehen, wobei auch diese Signale 24, 25 als gestrichelte Linie in Figur 1 angedeutet sind.

Erfindungsgemäß ist bei der Vorrichtung zum Steuern der Arbeitstiefe des Pfluges 3 vorgesehen, daß als zusätzliche Regelgröße für die Steuerelektronik 4 ein Signal eines an der Vorderachse 26 des Traktors 1 angeordneten Sensor 27 vorgesehen ist.

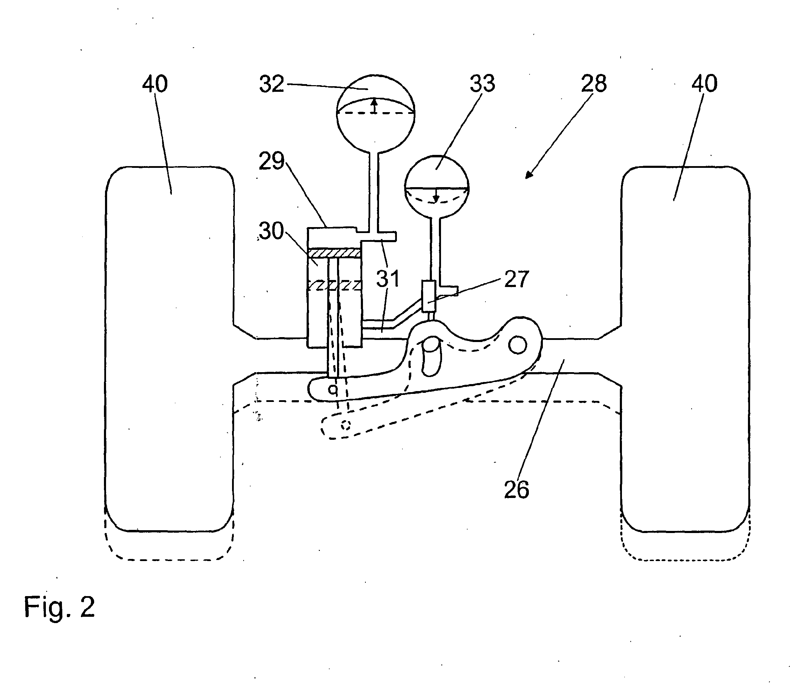

In Figur 2 ist eine schematische Vorderansicht des Traktors 1 dargestellt, bei der die hydraulisch gefederte Vorderachse 26 prinzipmäßig gezeigt wird. Die Vorderachse 26 des Traktors 1 weist zwei Räder 40 auf, wobei die Vorderachse 26 bei diesem Ausführungsbeispiel mit einer hydropneumatischen Niveauregelung 28 ausgerüstet ist.

Die hydropneumatische Niveauregelung 28 umfaßt zumindest einen Hydraulikzylinder 29, der als kräfteübertragendes Stellglied zwischen dem Rahmen 19 des Traktors 1 und der Vorderachse 26 vorgesehen ist. Ein Druckraum 30 des Hydraulikzylinders 29 ist über hydraulische Verbindungsleitungen 31 mit als Federelement dienenden hydropneumatischen Energiespeichern 32, 33 verbunden.

Durch gestrichelte Linie ist in Figur 2 eine zweite Niveaustellung der Vorderachse 26 des Trakors 1 angedeutet. In dieser Niveaustellung ist der Hydraulikzylinder 29 entsprechend weit verschoben.

Der an der Vorderachse 26 vorgesehene Lagesensor 27 ermittelt den jeweils vorliegenden Einfederungsweg der Vorderachse 26 und gibt sein elektrisches Signal 34 der Steuerelektronik 4 als Regelgröße vor. Dieses Signal 34 ist in Figur 1 durch eine gestrichelte Linie dargestellt.

In Abhängigkeit der als Regelgrößen eingehenden Signale 15, 16, 22, 24, 25, 34, steuert die Steuerelektronik 4 das über den kraftgeregelten Oberlenker 8 bewegbare Hubwerk 2 mit dem Pflug 3 derart, daß die Vorderachslast der Vorderachse 26 des Traktors 1 einen vorgegebenen Minimalwert nicht unterschreitet. Durch die optimale Nutzung der auf den Traktor 1 wirkenden Vertikalkräfte wird somit insbesondere eine zur Lenkung des Traktors 1 ausreichende Vorderachslast der Vorderachse 26 jederzeit sichergestellt.

Bei der Verwendung des Signals 34 des Lagesensors 27 der Vorderachse 26 ist zu beachten, daß dies vorzugsweise nur in Verbindung mit abgeschalteter Niveauregelung 28 vorgesehen wird, denn sonst besteht die Gefahr kollidierender Reglerziele.

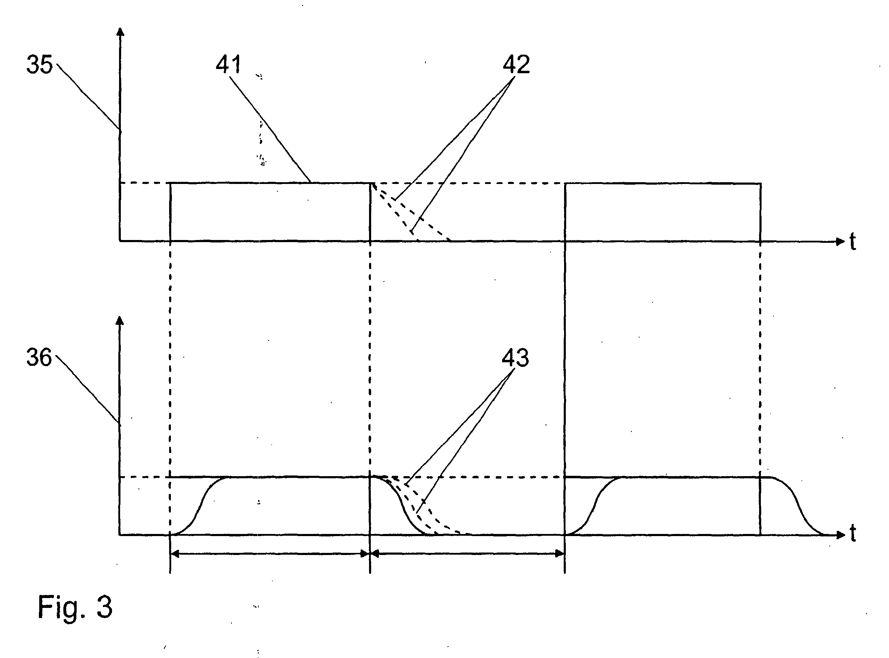

Der Steuerelektronik 4 ist eine Lagesollwertfunktion zum Senken und Heben des Pfluges 3 vorgegeben. In Figur 3 sind der Verlauf der Änderung des Lagesollwertes 35 und der Verlauf der Änderung des Lageistwertes 36, welcher die aktuelle Höhe des Pfluges 3 zu einer Bezugsebene wiedergibt, untereinander über die Zeit t dargestellt.

Die Lagesollwertfunktion beim Heben des Pfluges 3 ist eine Sprungfunktion 41 die periodisch über die Zeit t dargestellt ist. Die Lagesollwertfunktion beim Senken des Pfluges 3 ist dagegen eine Rampenfunktion 42, wobei in Figur 3 die Lagesollwertfunktion beim Senken durch mehrere gestrichelte Linien dargestellt ist, welche hier beispielsweise zwei Sollwertfunktionen mit unterschiedlichen Gradienten wiedergeben.

Vergleicht man die Verläufe der vorgegebenen und der tatsächlichen Höhenposition des Pfluges 3 anhand der Lageistwertfunktion und der Lagesollwertfunktion in Fig. 3, so ist ersichtlich, daß durch die Rampenfunktion 42 für den Sollwert 35 beim Senken des Pfluges 3 relativ eine allmähliche Absenkung des Pfluges 3 erfolgt, wie dies durch eine Übergangsfunktion 43 beim Senken in Figur 3 verdeutlicht wird.

Durch das allmähliche Senken des Pfluges 3 wird keine plötzliche Entlastung der Vorderachse des Traktors 1 erreicht. Dadurch wird eine Absenkung der Vorderachslast der Vorderachse 26 des Traktors 1 unterhalb eines vorgegebenen Minimalwertes vermieden. Dies führt dazu, daß einerseits die Lenkeigenschaften des Traktors 1 und andererseits der Wirkungsgrad der Triebachse des Traktors 1 bei der erfindungsgemäßen Vorrichtung zum Steuern der Arbeitstiefe des Pfluges 3 optimal ist.

## Patentansprüche

1. Vorrichtung zum Steuern der Arbeitstiefe eines Bodenbearbeitungsgerätes (3), insbesondere eines Pfluges, bei der eine Steuerelektronik (4) vorgesehen ist, die das mittels eines Hubwerkes (2) an einer Zugmaschine (1), insbesondere einem Traktor, höhenverstellbar angelenkte Bodenbearbeitungsgerät (3) ansteuert, wobei als Regelgrößen für die Steuerelektronik (4) Signale (15, 16) eines Kraftsensors (14) und/oder eines Lagesensors (13) des Hubwerkes (2) und Signale (22, 24) eines Wegsensors (21) und/oder eines Drucksensors (23) des Bodenbearbeitungsgerätes (3) sowie Sollwertvorgaben (38) vorgesehen sind, **dadurch gekennzeichnet, daß** als zusätzliche Regelgröße für die Steuerelektronik (4) ein Signal (34) eines Sensors (27) einer Vorderachse (26) der Zugmaschine (1) vorgesehen ist und daß die Steuerelektronik (4) das über einen kraftgeregelten Oberlenker (11) bewegbare Hubwerk (2) mit dem Bodenbearbeitungsgerät (3) derart ansteuert, daß die Vorderachslast der Zugmaschine (1) einen vorgegebenen Minimalwert nicht unterschreitet.

2. Vorrichtung nach Anspruch 1, **dadurch gekennzeichnet, daß** der Sensor (27) ein an der Vorderachse (26) vorgesehener Lagesensor (27) ist, der jeweils einen ermittelten Einfederungsweg der Vorderachse (26) der Steuerelektronik (4) als Regelgröße vorgibt.

3. Vorrichtung nach einem der Ansprüche 1 oder 2, **dadurch gekennzeichnet, daß** der Lagesensor (27) mit einer Niveauregelung (28) der Vorderachse (26) der Zugmaschine (1) gekoppelt ist.

4. Vorrichtung nach Anspruch 3, **dadurch gekennzeichnet, daß** der Lagesensor (27) ein Wegsensor ist.

5. Vorrichtung nach Anspruch 3, **dadurch gekennzeichnet, daß** der Lagesensor (27) ein Winkelsensor ist.

6. Vorrichtung nach einem der Ansprüche 1 bis 5, **dadurch gekennzeichnet, daß** der Steuerelektronik (4) eine Lagesollwertfunktion (41, 42) zum Senken oder Heben des Bodenbearbeitungsgerätes (3) vorgegeben ist.

7. Vorrichtung nach Anspruch 6, **dadurch gekennzeichnet, daß** die Lagesollwertfunktion beim Heben des Bodenbearbeitungsgerätes (3) eine Sprungfunktion (41) ist.

8. Vorrichtung nach Anspruch 6, **dadurch gekennzeichnet, daß** die Lagesollwertfunktion beim Senken des Bodenbearbeitungsgerätes (3) eine Rampenfunktion (42) ist.

9. Vorrichtung nach einem der Ansprüche 1 bis 8, **dadurch gekennzeichnet, daß** das Bodenbearbeitungsgerätes (3) neben einem Wegsensor (21) und/oder einem Drucksensor (23) zusätzlich einen Drehzahlsensor (37) an einem Stützrad (17) aufweist.

## Claims

1. Apparatus for controlling the operating depth of a soil-working machine (3), in particular a plough, in which apparatus control electronics (4) are provided which actuate the soil-working machine (3) which is connected to a towing machine (1), in particular a tractor, in a vertically adjustable and articulated manner by means of a lifting mechanism (2), with signals (15, 16) from a force sensor (14) and/or from a position sensor (13) of the lifting mechanism (2) and signals (22, 24) from a travel sensor (21) and/or from a pressure sensor (23) of the soil-working machine (3) and predefined setpoint values (38) being provided as control variables for the control electronics (4), **characterized in that** a signal (34) from a sensor (27) of a front axle (26) of the towing machine (1) is provided as an additional control variable for the control electronics (4), and **in that** the control electronics (4) actuate the lifting mechanism (2), which can be moved by means of a force-controlled upper link (11), with the soil-working machine (3) in such a way that the load on the front axle of the towing machine (1) does not fall below a prespecified minimum value.

2. Apparatus according to Claim 1, **characterized in that** the sensor (27) is a position sensor (27) which is provided on the front axle (26) and in each case prespecifies a determined spring compression travel of the front axle (26) to the control electronics (4) as a control variable.

3. Apparatus according to either of Claims 1 and 2, **characterized in that** the position sensor (27) is coupled to a level control means (28) of the front axle (26) of the towing machine (1).

4. Apparatus according to Claim 3, **characterized in that** the position sensor (27) is a travel sensor.

5. Apparatus according to Claim 3, **characterized in that** the position sensor (27) is an angle sensor.

6. Apparatus according to one of Claims 1 to 5, **characterized in that** a setpoint position function (41, 42) is prespecified to the control electronics (4) in order to lower or raise the soil-working machine (3).

7. Apparatus according to Claim 6, **characterized in that** the setpoint position function is a jump function (41) when the soil-working machine (3) is raised.

8. Apparatus according to Claim 6, **characterized in that** the setpoint position function is a ramp function (42) when the soil-working machine (3) is lowered.

9. Apparatus according to one of Claims 1 to 8, **characterized in that**, in addition to a travel sensor (21) and/or a pressure sensor (23), the soil-working machine (3) additionally has a rotational-speed sensor (37) on a supporting wheel (17).

## Revendications

1. Dispositif de commande de la profondeur de travail d'une machine pour le travail du sol (3) notamment d'une charrue, comportant une électronique de commande (4) qui commande avec un mécanisme de levage (2), la machine de travail du sol (3) articulée de manière réglable en hauteur sur une machine de traction (1) notamment un tracteur, les grandeurs de réglage de l'électronique de commande (4) étant les signaux (15, 16) fournis par un capteur de force (14), et/ ou un capteur de position (13) du mécanisme de levage (2) et les signaux (22, 24) d'un capteur de course (21) et/ou d'un capteur de pression (23) de l'appareil de travail du sol (3) ainsi que des valeurs de consigne prédéfinies (38),
**caractérisé en ce que**
la grandeur de régulation supplémentaire de l'électronique de commande (4) est un signal (34) fourni par un capteur (27) d'un essieu avant (26) de la machine de traction (1), et
l'électronique de commande (4) commande le mécanisme de levage (2) et la machine de travail du sol (3), mécanisme actionné par un bras supérieur (11) régulé en force, de façon que la charge de l'essieu avant de la machine de traction (1) ne passe pas en dessous d'une valeur minimale prédéfinie.

2. Dispositif de commande selon la revendication 1,
**caractérisé en ce que**
le capteur (27) prévu sur l'essieu avant (26) est un capteur de position (27) qui prédéfinit comme grandeur de régulation une course de ressort, déterminée de l'essieu avant (26) pour l'électronique de commande (4).

3. Dispositif de commande selon l'une des revendications 1 ou 2,
**caractérisé en ce que**
le capteur de position (27) est couplé à une régulation de niveau (28) de l'essieu avant (26) de la machine de traction (1).

4. Dispositif de commande selon la revendication 3,
**caractérisé en ce que**
le capteur de position (27) est un capteur de course.

5. Dispositif de commande selon la revendication 3,
**caractérisé en ce que**
le capteur de position (27) est un capteur d'angle.

6. Dispositif de commande selon l'une des revendications 1 à 5,
**caractérisé en ce que**
l'électronique de commande (4) prédéfinit une fonction de valeur de consigne de position (41, 42) pour abaisser ou soulever la machine de travail du sol (3).

7. Dispositif de commande selon la revendication 6,
**caractérisé en ce que**
la fonction de la valeur de consigne de position pour le soulèvement de l'appareil de travail sol (3) est une fonction à variations brusques (41).

8. Dispositif de commande selon la revendication 6,
**caractérisé en ce que**
la fonction de valeur de consigne dé position pour l'abaissement de l'appareil pour le travail du sol (3) est une fonction en forme de rampe (42).

9. Dispositif de commande selon l'une des revendications 1 à 8,
**caractérisé en ce que**
l'appareil de travail du sol (3) comporte à côté d'un capteur de course (21) et/ou d'un capteur de pression (23) en plus un capteur de vitesse de rotation (37) prévu sur une roue de sustentation (17).
